# EUROPEAN PATENT SPECIFICATION

(11) **EP 1 730 399 B1**
(45) Date of publication and mention of the grant of the patent: **25.07.2007**
(21) Application number: 05708353.7
(22) Date of filing: 15.02.2005
(51) Int. Cl.: F04B 9/10, F04B 39/12, A23L 3/015

(54) **HIGH PRESSURE PUMPING APPARATUS**
HOCHDRUCKFÖRDERPUMPE
APPAREIL DE POMPAGE A HAUTE PRESSION

(30) Priority: 19.03.2004 GB 0406168
(43) Date of publication of application: 13.12.2006
(73) Proprietor: Stansted Fluid Power (Products) Ltd, Sawbridgeworth Hertfordshire CM21 0ES (GB)
(72) Inventor: FREEMAN, Alan, John, Morris, Sawbridgeworth, Hertfordshire CM21 0ES (GB)
(74) Representative: Coates, Ian Harold
(86) International application number: PCT/GB2005/000536
(87) International publication number: WO 2005/090785

(56) References cited:
- WO-A-01/13030
- WO-A-99/65341
- GB-A- 1 235 173
- US-A- 6 068 448
- US-B1- 6 209 445

## Description

### Field of the Invention

The present application relates to methods and apparatus for producing pressure. It is particularly applicable, but in no way limited, to high pressure pumps and pressure intensifiers. It is particularly applicable to applications where an apparatus is required which is easy to maintain and which is hygienic.

### Background to the Invention

Flowable substances, such as liquid food products, may be treated by exposure to ultrahigh-pressures. For example, liquid food products may be preserved or otherwise chemically or physically altered after exposure to ultrahigh-pressures. In one conventional process, the food substance is loaded into a pressure vessel where it is pressurized to a selected pressure for a selected period of time to achieve the desired physical or chemical change. The vessel is then depressurised and the contents unloaded. The pressure vessel may then be reloaded with a new volume of unprocessed substance and the process may be repeated.

A variety of pumps and pressure intensifiers are known which can be used in this process. However, they all suffer from major disadvantages relating to ease of maintenance and hygiene. A typical prior art arrangement is shown in Figure O. This illustrates twin intensifiers of a design in which the component parts are connected together by screw-threaded connections. This is only one of a variety of constructional arrangements that the pressure components, or a frame holding the pressure components are held in place by screw threaded components. A further example is described in WO99/65341 (Flow International Corporation) which uses a yoke to hold the pressure components in place against the ultrahigh-pressures generated within the system when in operation. The components of the yoke are held together by screw-threaded components.

A major disadvantage of using screw threads in this application is that they are susceptible to thread galling. Galling can occur with a variety of metals, but particularly with stainless steel when a stainless steel oxide surface film breaks down as a result of direct metal contact. Solid-phase welding can then take place (whereby material is transferred from one surface to another). The symptoms of galling include surface damage and seizing and freezing up of equipment. Galling commonly occurs when using stainless steel nuts and bolts together, where the contact points are subjected to high tightening torques.

Thread galling seems to be most prevalent with fasteners made of stainless steel, aluminium, titanium, and other alloys which self-generate an oxide surface film for corrosion protection. During fastener tightening, as pressure builds between the contacting and sliding thread surfaces, protective oxides are broken, possibly wiped off, and interface metal high points shear or lock together. This cumulative clogging-shearing-locking action causes increasing adhesion. In the extreme circumstances, galling leads to seizing - the actual freezing together of the threads. If tightening is continued, the fastener can be twisted off or its threads ripped out

A number of ways of reducing thread galling have been suggested. Lubricating the internal and/or external threads can reduce galling, but this may be impractical in food or pharmaceutical applications because of the potential for product contamination. Using different stainless alloy grades for the bolt and the nut components also reduces galling. However, under the ultrahigh-pressures generated in systems according to the present invention, galling remains a serious problem. It is particularly serious in applications where frequent strip downs for cleaning and seal changes are required.

This leads on to the second problem, being ease of maintenance and cleaning. This is a particular problem in food and pharmaceutical applications. Pressure intensifiers known in the art, such as those described above, have to be stripped down almost entirely to clean them. That is to say, the screw threads must be completely undone and the components have to be disassembled and separated from the unit to be cleaned, and seals replaced. Furthermore, there is no provision for sterilising the components immediately prior to assembly. The result is that cleaning and maintenance activities are time consuming and costly and can result in significant down time. It is an object of the present invention to overcome, or at least mitigate, some or all of the problems outlined above.

GB 1235173 (Maschinenfabrik Burckhardt A.G.) describes an improvement in the cylinder structure of a single or multi-stage piston compressor or pump, especially for compressors operating at very high pressures, for rapid assembly and dismantling of the cylinder inner parts.

### Summary of the invention

According to an aspect of the present invention, there is provided a pressure intensifier as claimed in Claim 1.

According to a further aspect of the present invention there is provided a pressure intensifier assembly comprising:-
(i) a high-pressure barrel assembly;
(ii) pressurising means;
(iii) a first and a second end closure assembly;
(iv) a tension frame assembly adapted to resist axial load exerted, in use, along the longitudinal axis of the high-pressure barrel assembly;
characterised in that the intensifier assembly further comprises at least one clamping piston adapted to preload the end closure(s) and the high-pressure barrel assembly against the tension frame assembly in order to overbalance anticipated internal end loads.

This arrangement has the advantage that no screw thread fixings are required within or associated with the tension frame or the pressure components. There are therefore no screw threads, and consequently no possibility of thread galling during disassembly or assembly.

Preferably the tension frame assembly takes the form of a yoke.

Preferably the assembly further comprises a first and a second high pressure seal assembly, said seal assemblies being located at either end of the high-pressure barrel assembly.

Preferably said pressurising means comprises a hydraulic ram assembly.

Preferably the assembly further comprises a stand.

In a particularly preferred embodiment the high-pressure barrel assembly is detachably mountable from the intensifier assembly without the need to undo a screw thread. This novel arrangement is possible as a direct result of using a clamping piston to pre-load the end closures. Removal of the pressure and withdrawal of the clamping piston allows the high-pressure barrel to be removed simply and easily.

Preferably at least one end closure is retractable and, once retracted, the assembly is adapted such that the pressure barrel assembly becomes detachable from the intensifier assembly.

In a particularly preferred embodiment said assembly further comprises a high-pressure barrel assembly lifting means.

Preferably the high-pressure barrel assembly is pivotally mounted with respect to the stand.

### Brief Description of the Drawings

The present invention will now be described, by way of example only, with reference to the following drawings wherein:-
Figure O illustrates a cross-sectional view of a prior art pressure intensifier in which the pressure components are held together by screw threads;
Figure 1 illustrates diagrammatic front and side elevations of a pressure intensifier assembly showing the key components according to a first embodiment;
Figure 2 illustrates the pressure intensifier assembly of Figure 1 in a so-called maintenance configuration;
Figure 3 illustrates a pressure intensifier assembly of the first embodiment including additional operating components;
Figure 4 illustrates an embodiment which incorporates shield facilitate steam sterilisation;
Figure 5 illustrates side and top elevations of a further embodiment showing a single intensifier assembly in a horizontal orientation.

### Detailed Description of the Preferred Embodiments

The present invention will now be described by way of example only. These examples represent the best ways known to the applicant of putting the invention into practice, but they are not the only ways this can be done.

The present invention relates to apparatus for producing high pressures, to pressure intensifiers, to apparatus for pressure-processing substances such as food products and to their methods of use and maintenance.

Figure O shows a typical twin intensifier arrangement of conventional design, which does NOT incorporate the claimed invention but is commonly used in currently existing systems; in industrial plant, and in laboratories where appropriate levels of pressures are required. In this context the term "pressure intensifier" is intended to encompass any apparatus wherein means are provided for pressure multiplication in a working chamber in order to amplify the total pressure supplied to a platen (eg pressure multiplication sleeve, pressure accumulator). The working chamber which provides the pressure multiplication feature may be separate from the working chamber in direct contact with the platen.

The intensifier assemblies 10 in Figure O depend upon screw threads 11,12 to retain the principal components and to resist the substantial forces exerted upon the end closures 13,14 and the central attachment body 15, which connects the high-pressure barrel 16 to the lower pressure drive assembly 17. Maintenance of these intensifiers requires heavy engineering tools as well as considerable manual effort in order to release the threads and to separate the major components just to gain access to the working seals 19,20, which require regular replacement, especially at the higher end of application pressure range, which may require pressures in the order of 1000 Mpa. (approximately = 150,000lb per square inch). The end closures and centre section retentions are all screw threads requiring engineering tools such as "tommy bars" and spanners for any internal maintenance to take place.

Thread galling, as described above, is inevitably a problem from time to time with this type of assembly, which is a further complication to this type of assembly.

It will also be appreciated that during disassembly the individual components must be lifted manually and put to one side. Where large intensifiers are involved this can create Health and Safety problems and may well limit the physical size of the unit.

In summary, Figure 0 illustrates a conventional intensifier construction. The end closures and centre section retentions are all screw threads requiring engineering tools such as "tommy bars" and spanners for all internal maintenance work.

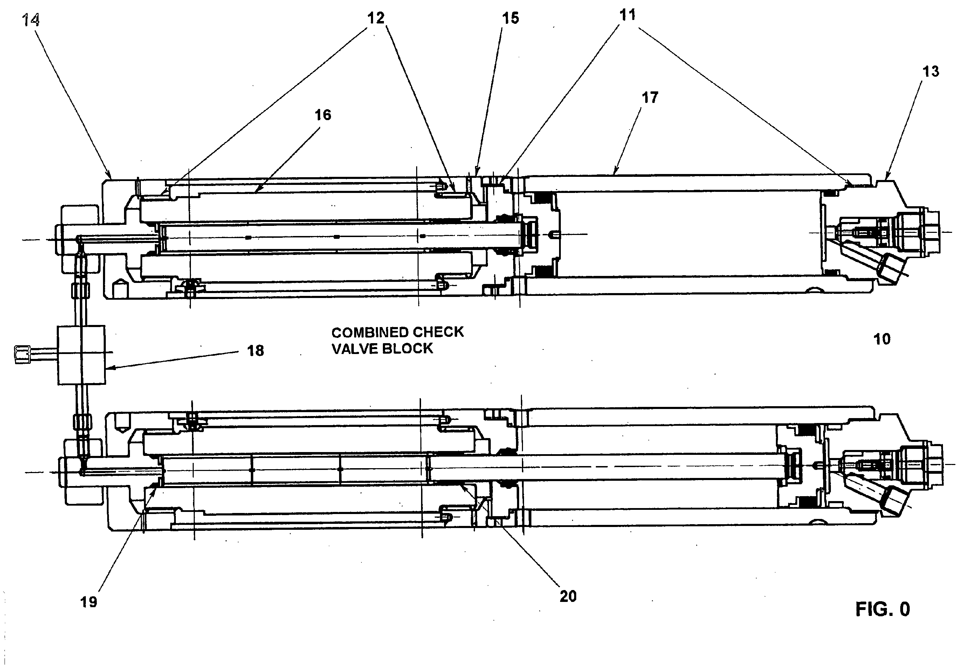

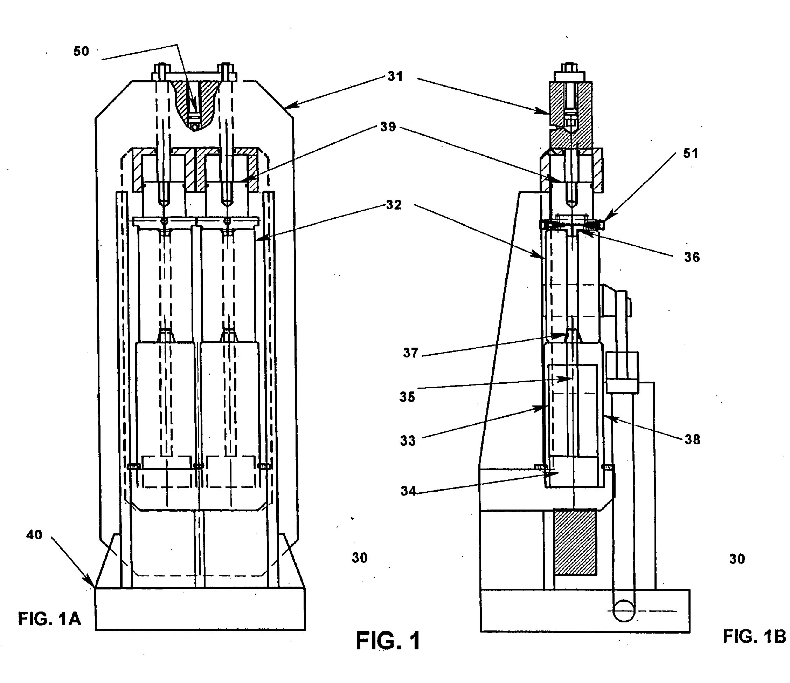

A preferred embodiment of the present invention is shown in Figure 1 in front and side elevation. The intensifier 30 of the present invention consists of a tension frame assembly 31 within which are located the key pressure generating components. This example illustrates a twin barrel arrangement but it is applicable to one or a plurality of barrel arrangements. In this context, and for the avoidance of any doubt, the term "plurality" has the meaning one or more.

The intensifier arrangement shown in Figure 1 and described in this and other embodiments may be used for a wide variety of high pressure applications, including use for high pressure gases as well as liquid fluids.

In this example the tension frame assembly is shown as an elongate yoke. However, this is not the only form which the tension frame can take. A wide variety of physical arrangements are possible, including a non-continuous frame, ie a frame which does not substantially entirely surround the pressure generating components. A yoke as illustrated has proven to be a simple and effective arrangement and, as such, is one of the preferred embodiments.

The pressure generating components include a high pressure barrel assembly 32 and a pressurising means 33 which includes a hydraulic drive piston 34 and high pressure ram 35 associated with a drive pressure cylinder 38. Drive piston 34 acts as an intensifier ram and primary drive pressure piston. Replaceable top 36 and bottom 37 closure seals are provided associated with top and bottom end closure means. The ram seal assemblies are therefore replaceable. Inlet and outlet spring-loaded check valves 51 are built into the top closure. Thus far the components and their assembly is of generally conventional design and of a type known per se. However, part of the novelty of this arrangement lies in the incorporation of a clamping piston 39 means which reacts against the longitudinal tension frame to exert a resilient axial force, which pre-loads the end closures and the central barrel abutments to overbalance any anticipated internal end-loads. The arrangement 50 provides the facility for lifting the clamping pistons in order to raise the caps and separate the barrel assembly (see below).

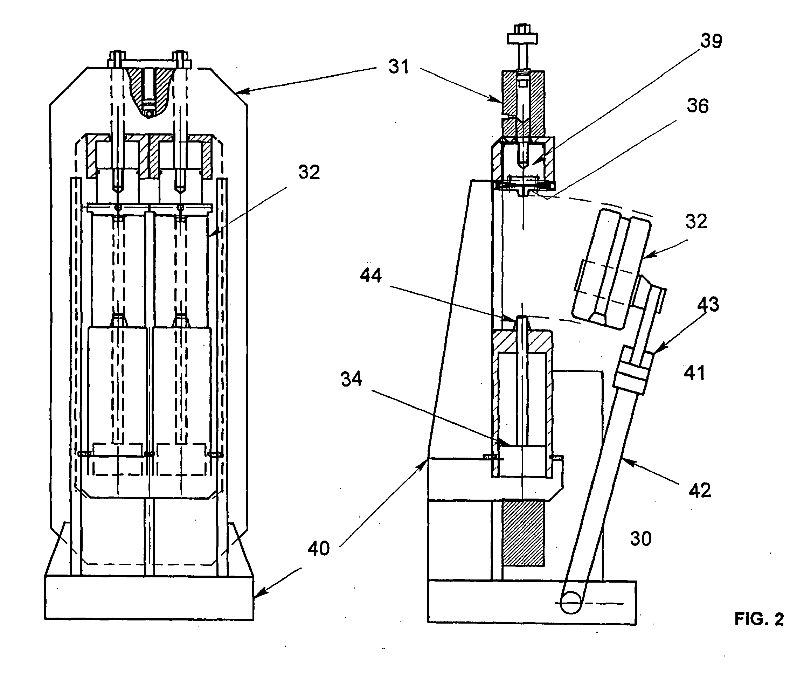

This arrangement brings with it a number of advantages. Firstly, no screw-threaded connections of any kind are required to secure the pressure components in place in use. Thus thread galling is not, and can never be, a problem during disassembly/assembly. Secondly, by applying an over-compensating force any elastic movement/deformation in the tension frame can easily be accommodated and the closure seals will remain intact and effective. Thirdly, and importantly, by withdrawing the clamping piston 39 towards the tension frame sufficient space is automatically created to enable the high-pressure barrel to be withdrawn for cleaning, maintenance and seal replacement. This arrangement is shown more clearly in Figure 2.

Figure 2, in which a numbering system corresponding to Figure 1 has been used, shows a preferred method of retracting the clamping pistons and manipulating the barrel assembly to gain free access for replacing the high-pressure seals. In Figure 2 the clamping pistons 39 are shown in their withdrawn or retracted position to provide separation clearance for the high pressure barrels to be manipulated clear of the frame assembly. Moreover, with simple automation, the barrel assembly may be automatically manipulated into the position for easy maintenance and repositioned and clamped with interlocks for safe operation at pressure.

The tension frame 31 is mounted on a stand 40. Also mounted on the stand 40 is a barrel lifting means generally shown as 41. In this example the barrel is pivotally mounted with respect to the stand by a swing column 42. It should be understood that in this context the term "pivotally mounted" has a broad meaning and is intended to encompass any arrangement whereby the barrel may swing out of the longitudinal plane of the tension frame. It does require or imply the presence of a true pivot point as shown in Figure 2, although this is one convenient arrangement.

It will be appreciated that the drive pressure assembly 38 simply sits on the bottom of the tension frame in this arrangement and it too may be lifted out for cleaning and maintenance if required.

By incorporating a barrel-lifting ram 43 into the swing column the barrel may be lifted clear of the lower ram seal assembly 44 and then swung out of the line of the tension frame. The barrel is thus lifted to clear the ram assembly on separation. The high pressure barrels are shown in Figure 2 located outside of the general line and profile of the frame, providing clear and unencumbered access to the seals for cleaning and maintenance.

Assembly, once seals have been replaced and any cleaning and maintenance has been done, is a reversal of the above process.

Using an arrangement whereby the barrel pivots out of the general longitudinal axis of the assembly is only one of a variety of arrangements which are possible. The barrel, or the tension frame for that matter, could move sideways or up or down, with respect to each other depending on the orientation of the unit.

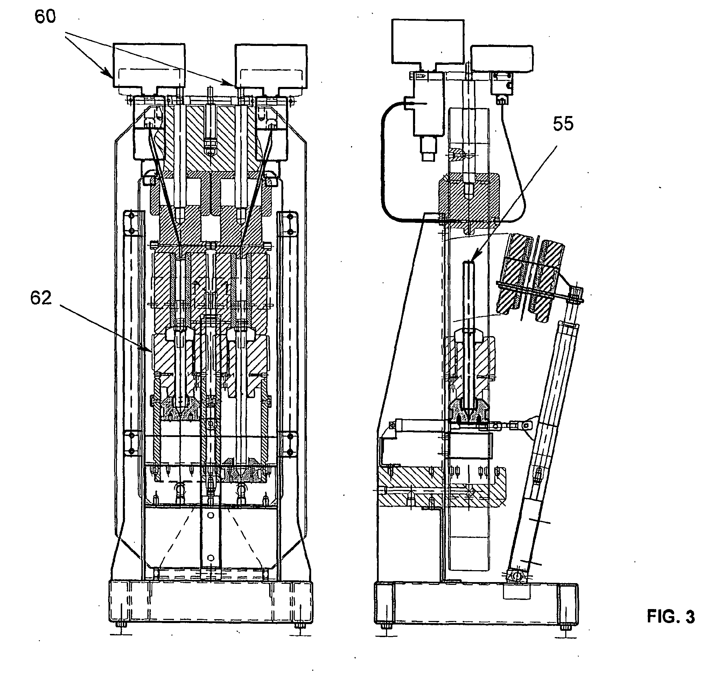

Figure 3 shows an extension of the claimed invention in which the twin intensifiers are required to pump liquids for the purpose of homogenisation. An essential requirement for this application is that all components, which come in contact with the process products are hygienically clean. The ability to open the assembly to clean all wetted component surfaces with sterile cleaning agents is a major advantage of the design according to the claimed invention.

Positive closing power operated valves 60 may be optionally fitted and synchronised with the stroking of the intensifiers in order to improve the reliability of flow control. This provides for a level of performance over and above the more commonly used spring loaded check valves. The use of such positive valving is especially beneficial when pumping suspended solids in fluids where the suspended materials can clog or otherwise impair the operation of spring loaded check valves.

It will also be appreciated from Figure 3 that the body of the drive pressure cylinder has been extended. The extended central body 62 houses the length of the ram not allowed to enter the processing chamber. Figure 3 illustrates the piston and ram assembly 55 in a raised position to facilitate cleaning the "wetted" surface of the rams.

It will be appreciated that this type of intensifier can be applied to homogenising and cell rupture machines which may be used to pump various liquids and fluid suspensions at high pressure through a homogenising valve or orifice or other constricting device in order to emulsify, activate or inactivate materials for numerous processes and purposes.

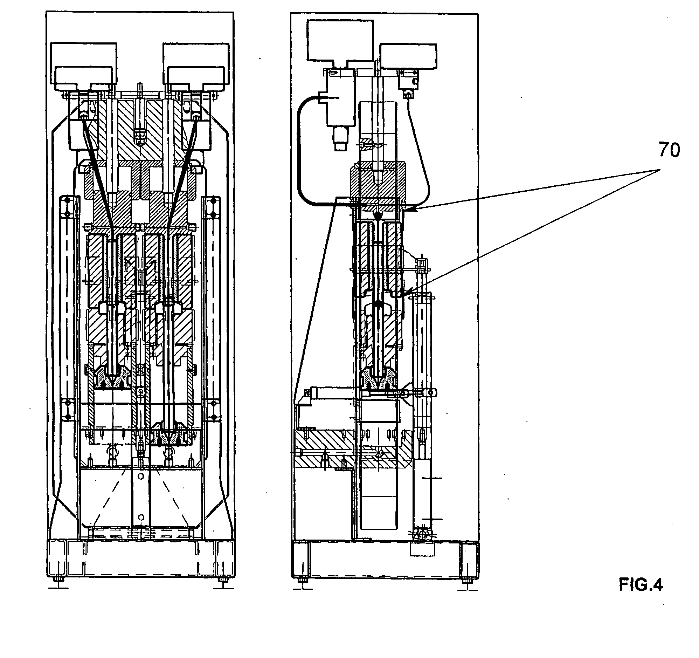

Figure 4 shows a further aspect of the invention which is a refinement to the hygienic application. A cylindrical shield 70 is provided and this shield is designed and adapted to be moved into the position shown whilst the barrels and caps are separated to provide an enclosed passage for steam sterilisation to be carried out.

The assembly may be closed with the shields remaining in place to prevent vital surfaces being exposed to the environment. Thus, in the semi-closed position, where the barrel assembly is in the vertical axial position within the frame, but still lifted above the seal carrier, the clamping pistons remain retracted so that the space exists below and above the high-pressure barrel blocks. Cylindrical sleeves 70, which would normally be parked in readiness, may be lifted into position to shield the open gaps. Also, the high-pressure ram is moved specially into the raised position for the purpose. High or low-pressure steam may be injected through the chambers in order to achieve ultimate sterilisation of all the important surfaces. Provision is made for the assembly to be closed with the cylindrical shields being lowered down to their normally parked position once assembly is completed, so that the sterilised surfaces remain protected from environmental contact both during and after the sterilisation process.

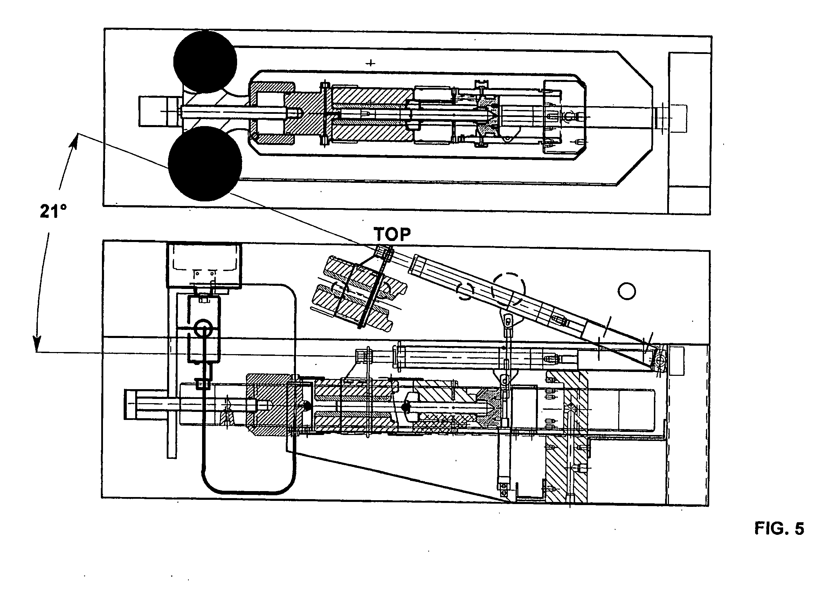

Figure 5 shows a single intensifier variation of the claimed invention in which the whole assembly is optionally horizontally mounted which would have advantages for smaller laboratory applications where bench top location is preferred. The components in this single, horizontal version correspond to those described in Figures 1 to 4 above and are numbered correspondingly. The barrel-lifting ram 143 in this embodiment lifts upwards, out of the horizontal place of the tension frame.

## Claims

1. A pressure intensifier assembly (30) comprising:-
(i) a high-pressure barrel assembly (32);
(ii) pressurising means (33);
(iii) a first and a second end closure assembly;
(iv) a tension frame assembly (31) adapted to resist axial load exerted, in use, along the longitudinal axis of the high-pressure barrel assembly;
**characterized in that** the intensifier assembly (30) further comprises at least one clamping piston (39) adapted to preload the end closure(s) and the high-pressure barrel assembly (32) against the tension frame assembly (32) in order to overbalance anticipated internal end loads;
and wherein the high pressure barrel assembly (32) is detachable from the pressure intensifier assembly (30) without the need to undo any screw thread.

2. A pressure intensifier assembly as claimed in Claim 1 wherein the tension frame assembly (31) takes the form of a yoke.

3. A pressure intensifier assembly as claimed in any preceding claim wherein the assembly further comprises a first and a second high pressure seal assembly (36, 37), said seal assemblies being located at either end of the high-pressure barrel assembly.

4. A pressure intensifier assembly as claimed in any preceding claim wherein said pressurising means comprises a hydraulic ram assembly (34, 35).

5. A pressure intensifier assembly as claimed in any preceding claim wherein the assembly further comprises a stand (40).

6. A pressure intensifier assembly as claimed in any preceding claim wherein at least one end closure is retractable and, once retracted, the assembly is adapted such that the pressure barrel assembly becomes detachable from the intensifier assembly.

7. A pressure intensifier assembly as claimed in Claim 6 inclusive wherein said assembly further comprises a high-pressure barrel assembly lifting means (41).

8. A pressure intensifier assembly as claimed in Claim 6 or Claim 7 inclusive when dependent on claim 5 wherein the high-pressure barrel assembly (32) is pivotally mounted with respect to the stand (40).

9. A pressure intensifier assembly as claimed in any preceding claim wherein said assembly further comprises a cylindrical shield (70) designed and adapted to provide an enclosed passage for steam sterilisation to be carried out.

10. A pressure intensifier assembly as claimed in Claim 9 wherein said shield (70) is moveable.

11. A pressure intensifier as claimed in Claim 10 wherein the assembly may be closed with the shield (70) remaining in place.

12. A pressure intensifier as claimed in Claim 11 wherein the cylindrical shield (70) can be lowered to a parked position once assembly is complete.

## Patentansprüche

1. Druckverstärker-Baugruppe (30) mit:
(i) einer Hochdruck-Zylinder-Baugruppe (32);
(ii) Druckbeaufschlagungseinrichtungen (33);
(iii) einer ersten und einer zweiten Endverschluss-Baugruppe;
(iv) einer Spannrahmen-Baugruppe (31), die so ausgebildet ist, dass sie einer im Betrieb ausgeübten axialen Last entlang der Längsachse der Hochdruck-Zylinder-Baugruppe widersteht;
**dadurch gekennzeichnet, dass** die Druckverstärker-Baugruppe (30) weiterhin zumindest einen Klemmkolben (39) umfasst, der zur Vorbelastung des Endverschlusses oder der Endverschlüsse und der Hochdruck-Zylinder-Baugruppe (32) gegen die Spann-Baugruppe (32) ausgebildet ist, um einen Über-Ausgleich von erwarteten internen Endkräften zu bewirken;
und wobei die Hochdruck-Zylinder-Baugruppe (32) von der Druckverstärker-Baugruppe (30) ohne die Notwendigkeit eines Lösens irgendeines Schraubengewindes trennbar ist.

2. Druckverstärker-Baugruppe nach Anspruch 1, bei der die Spannrahmen-Baugruppe (31) die Form eines Jochs aufweist.

3. Druckverstärker-Baugruppe nach einem der vorhergehenden Ansprüche, wobei die Baugruppe weiterhin eine erste und eine zweite Hochdruck-Dichtungs-Baugruppe (36, 37) umfasst, wobei die Dichtungs-Baugruppen an jedem Ende der Hochdruck-Zylinder-Baugruppe angeordnet sind.

4. Druckverstärker-Baugruppe nach einem der vorhergehenden Ansprüche, bei der die Druckbeaufschlagungseinrichtung eine Hydraulikkolben-Baugruppe (34, 35) umfasst.

5. Druckverstärker-Baugruppe nach einem der vorhergehenden Ansprüche, bei der die Baugruppe weiterhin einen Ständer (40) umfasst.

6. Druckverstärker-Baugruppe nach einem der vorhergehenden Ansprüche, bei der zumindest ein Endverschluss zurückziehbar ist, und dass nach dessen Zurückziehen die Baugruppe derart angeordnet ist, dass die Druckzylinder-Baugruppe aus der Druckverstärker-Baugruppe lösbar wird.

7. Druckverstärker-Baugruppe nach Anspruch 6 einschließlich, bei der die Baugruppe weiterhin eine Hubeinrichtung (41) für die Hochdruck-Zylinder-Baugruppe umfasst.

8. Druckverstärker-Baugruppe nach Anspruch 6 oder 7 einschließlich, unter Rückbeziehung auf Anspruch 5, wobei die Hochdruck-Zylinder-Baugruppe (32) schwenkbar gegenüber dem Ständer (40) befestigt ist.

9. Druckverstärker-Baugruppe nach einem der vorhergehenden Ansprüche, bei der die Baugruppe weiterhin eine zylindrische Abschirmung (70) umfasst, die zur Schaffung eines umschlossenen Kanals für die Durchführung einer Dampfsterilisierung ausgebildet und angepasst ist.

10. Druckverstärker-Baugruppe nach Anspruch 9, bei der die Abschirmung (70) beweglich ist.

11. Druckverstärker nach Anspruch 10, bei der die Baugruppe geschlossen werden kann, während die Abschirmung (70) an ihrem Platz bleibt.

12. Druckverstärker nach Anspruch 11, bei der die zylindrische Abschirmung (70) in eine Parkstellung abgesenkt werden kann, sobald der Zusammenbau abgeschlossen ist.

## Revendications

1. Ensemble multiplicateur de pression (30) comprenant :
(i) un ensemble de cuve haute pression (32) ;
(ii) des moyens de mise sous pression (33) ;
(iii) un premier et un second ensembles de fermeture d'extrémité ;
(iv) un ensemble de cadre de tension (31) adapté pour résister à l'effort axial exercé, au cours d'une utilisation, le long de l'axe longitudinal de l'ensemble de cuve haute pression ;
**caractérisé en ce que** l'ensemble multiplicateur de pression (30) comprend en outre au moins un piston de serrage (39) adapté pour précharger la(les) fermeture(s) d'extrémité et l'ensemble de cuve haute pression (32) contre l'ensemble de cadre de tension (32) afin de contrebalancer les charges sur les parois d'extrémité internes anticipées ;
et dans lequel l'ensemble de cuve haute pression (32) peut être détaché de l'ensemble multiplicateur de pression (30) sans nécessiter de défaire un filet de vis quelconque.

2. Ensemble multiplicateur de pression selon la revendication 1, dans lequel l'ensemble de cadre de tension (31) prend la forme d'une fourche.

3. Ensemble multiplicateur de pression selon l'une quelconque des revendications précédentes, dans lequel l'ensemble comprend en outre un premier et un second ensembles d'étanchéité haute pression (36, 37), lesdits ensembles d'étanchéité étant situés à l'une ou l'autre des extrémités de l'ensemble de cuve haute pression.

4. Ensemble multiplicateur de pression selon l'une quelconque des revendications précédentes, dans lequel lesdits moyens de mise sous pression comprennent un ensemble de vérin hydraulique (34, 35).

5. Ensemble multiplicateur de pression selon l'une quelconque des revendications précédentes, dans lequel l'ensemble comprend en outre un support (40).

6. Ensemble multiplicateur de pression selon l'une quelconque des revendications précédentes, dans lequel au moins une fermeture d'extrémité est rétractable et, une fois rétractée, l'ensemble est adapté de telle sorte que l'ensemble de cuve haute pression peut être détaché de l'ensemble multiplicateur.

7. Ensemble multiplicateur de pression selon la revendication 6 comprise, ledit ensemble comprenant en outre des moyens de levage de l'ensemble de cuve haute pression (41).

8. Ensemble multiplicateur de pression selon la revendication 6 ou la revendication 7 comprise, pour la dépendance vis-à-vis de la revendication 5, dans lequel l'ensemble de cuve haute pression (32) est monté de manière pivotante par rapport au support (40).

9. Ensemble multiplicateur de pression selon l'une quelconque des revendications précédentes, dans lequel ledit ensemble comprend en outre un élément de protection cylindrique (70) conçu et adapté pour fournir un passage enfermé pour réaliser la stérilisation de la vapeur.

10. Ensemble multiplicateur de pression selon la revendication 9, dans lequel ledit élément de protection (70) est mobile.

11. Ensemble multiplicateur de pression selon la revendication 10, dans lequel l'ensemble peut être fermé avec l'élément de protection (70) qui reste en place.

12. Ensemble multiplicateur de pression selon la revendication 11, dans lequel l'écran de protection cylindrique (70) peut être abaissé dans une position installée une fois que l'ensemble est achevé.
